# EUROPÄISCHE PATENTSCHRIFT

(11) **EP 3 771 650 B1**
(45) Veröffentlichungstag und Bekanntmachung des Hinweises auf die Patenterteilung: **26.10.2022**
(21) Anmeldenummer: 20188574.6
(22) Anmeldetag: 30.07.2020
(51) Int. Cl.: B64F 5/10, B64C 1/06

(54) **SPANTKOMPONENTE UND VERFAHREN ZUR HERSTELLUNG EINER SPANTKOMPONENTE, SPANT UND RUMPFSTRUKTUR FÜR EIN LUFTFAHRZEUG**
FRAME COMPONENT AND METHOD FOR MANUFACTURING A FRAME COMPONENT, FRAME AND FUSELAGE STRUCTURE FOR AN AIRCRAFT
COMPOSANT DE CADRE ET PROCÉDÉ DE FABRICATION D'UN COMPOSANT DE CADRE, CADRE ET STRUCTURE DE FUSELAGE POUR UN AÉRONEF

(30) Priorität: 31.07.2019 DE 102019211434
(43) Veröffentlichungstag der Anmeldung: 03.02.2021
(73) Patentinhaber: Premium AEROTEC GmbH, 86179 Augsburg (DE)
(72) Erfinder: HAACK, Cord, 86179 Augsburg (DE); PAUL, Carsten, 86179 Augsburg (DE); HÖRGER, Bernhard, 86179 Augsburg (DE)
(74) Vertreter: LKGLOBAL Lorenz & Kopf PartG mbB Patentanwälte

(56) Entgegenhaltungen:
- EP-A1- 0 469 909
- DE-A1-102007 021 075
- US-A1- 2010 327 113
- US-A1- 2015 367 929
- US-A1- 2018 162 510
- US-A1- 2019 193 830
- US-B2- 7 686 249

## Beschreibung

Die vorliegende Erfindung betrifft eine Spantkomponente für einen Spant einer Rumpfstruktur eines Luftfahrzeugs, ein Verfahren zur Herstellung der Spantkomponente, einen Spant sowie eine Rumpfstruktur für ein Luftfahrzeug.

Ein Rumpf eines Luftfahrzeugs weist typischerweise eine Rumpfstruktur auf, welche mehrere parallel zueinander angeordnete, eine Rumpflängsachse umschließende Spanten und sich entlang der Rumpflängsachse erstreckende Stringer umfasst. Eine Außenhaut wird in der Regel an den Stringern und den Spanten befestigt. Spante existieren in verschiedenen Querschnittsformen, z.B. als Z-Profile oder als T-Profile. Spante weisen in der Regel zudem Stringerausnehmungen auf, durch welche hindurch sich die Stringer erstrecken. Eine Verbindung der Außenhaut an die Spanten wird typischerweise mittels sogenannter Clips realisiert. Hierbei handelt es sich um im wesentlichen L-förmige Beschläge, welche jeweils mit der Außenhaut und mit dem Spant vernietet oder verschraubt sind.

Die US 5 518 208 A beschreibt einen Spant für ein Luftfahrzeug mit einem zentralen Steg, einem an einem inneren Ende des zentralen Stegs angeordneten Innensteg, welcher gemeinsam mit dem zentralen Steg einen T-förmigen Querschnitt definiert, und mit an einem äußeren Ende des zentralen Stegs angeordneten äußeren Stegen, welche sich abwechselnd zu einer ersten und einer zweiten Seite des zentralen Stegs erstrecken und entlang einer Längsrichtung des zentralen Stegs beabstandet zueinander angeordnet sind. Eine Stringerausnehmung ist an dem äußeren Ende des zentralen Stegs zwischen zwei benachbarten äußeren Stegen angeordnet. An dem zentralen Steg ist ferner zwischen dem inneren Ende und der Stringerausnehmung eine Rippe ausgebildet. Im Zusammenbau zu einem Flugzeugrumpf erstreckt sich ein Stringer durch die Stringerausnehmung und eine Verbindungsplatte, welcher zur Verbindung mit einer Außenhaut vorgesehen ist, wird an dem Stringer und an die Außenstege des Spants angenietet.

Die US 2015 / 367 929 A1 beschreibt eine Flugzeugrumpfversteifung, die einen Absatz, einen Flansch und einen den Absatz und den Flansch verbindenden Steg umfasst. Die Versteifung umfasst ein gefaltetes Blech, das sich entlang der Länge des Absatzes, des Stegs und des Flansches erstreckt. Um das mechanische Verhalten der Versteifung zu verbessern, umfasst das gefaltete Blech einerseits einen Hauptabschnitt, der sich entlang der Länge des Absatzes, des Stegs und des Flansches erstreckt, und andererseits mindestens einen umgebogenen Abschnitt, der eine Verkleidung des Hauptabschnitts über mindestens einem Teil des Stegs und/oder des Absatzes und/oder des Flansches bildet.

Die US 7 686 249 B2 beschreibt ein Rahmenelement für ein Flugzeug, das einen Clipbereich und einen Rahmenbereich umfasst. Gemäß einem Aspekt dieser Offenbarung sind der Clipbereich, der Scherstegbereich und der Rahmenbereich in das Rahmenelement integriert und werden durch ein Fräsverfahren aus einer Extrusionsform gebildet. Dies ermöglicht vorteilhafterweise eine reduzierte Anzahl von Einzelelementen zur Bildung eines Rahmenelements und bietet die Flexibilität der Variation der Formen und Abmessungen eines Rahmenelements für ein Flugzeug.

Die US 2018 / 162 510 A1 beschreibt einen Körper für ein mobiles Fahrzeug. Der Körper umfasst eine Haut, einen Stringer und einen Rahmen. Die Haut umfasst eine erste Lasche und eine zweite Lasche, die der ersten Lasche gegenüberliegt. Die erste Lasche ist direkt an der Haut befestigt und die zweite Lasche ist direkt an der Haut befestigt. Der Rahmen umfasst einen Ausschnitt, einen ersten Fuß und einen zweiten Fuß. Der zweite Fuß ist durch den Ausschnitt vom ersten Fuß beabstandet. Der erste Fuß ist direkt auf der ersten Lasche des Stringer befestigt, so dass die erste Lasche des Stringer unmittelbar zwischen dem ersten Fuß des Rahmens und der Haut liegt. Der zweite Fuß ist direkt auf der Haut befestigt, so dass kein Teil des Rahmens direkt auf der zweiten Lasche des Längsträgers befestigt ist.

Es ist Aufgabe der vorliegenden Erfindung, verbesserte Lösungen für einen Spant einer Rumpfstruktur eines Luftfahrzeugs zu finden. Eine der Ideen der Erfindung ist es insbesondere, einen auf einfache und effiziente Weise herstellbaren bzw. montierbaren Spant zu finden.

Diese Aufgabe wird jeweils durch die Gegenstände der unabhängigen Ansprüche gelöst.

Gemäß einem ersten Aspekt der Erfindung ist eine Spantkomponente für einen Spant einer Rumpfstruktur eines Luftfahrzeugs vorgesehen. Die erfindungsgemäße Spantkomponente weist einen sich entlang einer Längsrichtung erstreckenden Mittelsteg, welcher einen in Bezug auf eine quer zur Längsrichtung verlaufende radiale Richtung inneren Randbereich und einen in Bezug auf die radiale Richtung äußeren Randbereich aufweist. Der Mittelsteg ist somit plattenförmig realisiert und kann sich insbesondere bogenförmig entlang der Längsrichtung erstrecken. Eine erste Oberfläche des Mittestegs definiert eine erste Seite. Eine entgegengesetzt zu der ersten Oberfläche orientierte zweite Oberfläche des Mittelstegs definiert eine zweite Seite. Eine Dicke des Mittelstegs in einer quer zur Längsrichtung und quer zu der radialen Richtung verlaufenden Dickenrichtung zwischen der ersten und der zweiten Oberfläche gemessen wird, kann z.B. in einem Bereich zwischen 1,0 mm und 3,5 mm liegen.

Die Spantkomponente umfasst ferner einen von dem inneren Randbereich des Mittelstegs zu der ersten Seite hin abgebogenen Innensteg und eine von dem äußeren Randbereich des Mittelstegs zu der ersten Seite hin abgebogenen Außensteg, wobei der Mittelsteg, der Außensteg und der Innensteg einstückig aus einem Metallblech hergestellt sind und gemeinsam einen C-förmigen Querschnitt der Spantkomponente definieren. Der Innensteg erstreckt sich somit von dem inneren Randbereich des Mittelstegs aus und quer zu diesem auf der ersten Seite. Der Außensteg erstreckt sich von dem äußeren Randbereich des Mittelstegs aus und quer zu dem Mittelsteg und ebenfalls auf der ersten Seite des Mittelstegs. Der Innensteg und der Außensteg können somit parallel oder im Wesentlichen parallel zueinander verlaufen. Insbesondere sind der Mittelsteg, der Innensteg und der Außensteg aus ein und demselben Metallblech, dessen Dicke z.B. in einem Bereich zwischen 1,0 mm und 3,5 mm liegen kann, durch Umformung bzw. Umbiegen hergestellt. Das Metallblech kann insbesondere eine konstante Dicke aufweisen. Als Material kommen für das Metallblech beispielsweise Aluminiumlegierungen oder Titanlegierungen in Frage.

Weiterhin weist die Spantkomponente zumindest eine in dem Außensteg und in dem äußeren Randbereich des Mittelstegs ausgebildete Stringerausnehmung auf.

Die Stringerausnehmung dient zur Aufnahme eines sich quer zu dem Mittelsteg erstreckenden Stringers und bildet in dem Außensteg eine Unterbrechung entlang der Längsrichtung und in dem Mittelsteg eine sich zwischen der ersten und der zweiten Oberfläche erstreckende Öffnung aus.

Erfindungsgemäß weist der Mittelsteg im Bereich der Stringerausnehmung eine erste Verstärkungsausformung auf, welche auf der ersten Seite des Mittelstegs einen Vorsprung ausbildet. Demnach weist der Mittelsteg im Bereich der Stringerausnehmung eine in der Dickenrichtung vorstehende Struktur auf, wodurch eine Biegesteifigkeit des Mittelstegs im Bereich der Stringerausnehmung, bei welcher der Außensteg unterbrochen ist, vergrößert wird.

Gemäß dem ersten Aspekt der Erfindung weist die Spantkomponente ferner einen Verbindungsbereich zur Verbindung mit einer weiteren Spantkomponente auf, welcher in der Längsrichtung ein Ende der Spantkomponente bildet, und wobei der Mittelsteg an einem sich in Bezug auf die Längsrichtung an den Verbindungsbereich anschließenden Endbereich eine zweite Verstärkungsausformung in Form einer von einer zweiten Seite des Mittelstegs her eingebrachten Sicke aufweist, welche auf der ersten Seite des Mittelstegs einen Vorsprung ausbildet und sich zumindest teilweise entlang der radialen Richtung erstreckt. Der Verbindungsbereich ist zur Überlappung mit dem Verbindungsbereich einer weiteren Spantkomponente vorgesehen. Optional kann sich der Mittelsteg in dem Verbindungsbereich in Bezug auf die radiale Richtung verjüngt im Verhältnis zu dem Endbereich ausgebildet sein, was ein Ineinanderschieben zweier Spantkomponenten erleichtert. Die zweite Verstärkungsausformung kann wie die erste Verstärkungsausformung als längliche Sicke ausgebildet sein, wobei die erste Oberfläche des Mittelstegs eine Erhöhung und die zweite Oberfläche des Mittelstegs eine entsprechende Vertiefung ausbildet. Da die die zweite Verstärkungsausformung ausbildende Sicke zumindest abschnittsweise entlang der radialen Richtung verläuft, wird die Torsionssteifigkeit der Spantkomponente in einem benachbart zu dem Verbindungsbereich gelegenen Bereich vorteilhaft vergrößert.

Gemäß dem ersten Aspekt der Erfindung ist der Verbindungsbereich der Spantkomponente relativ zu dem Endbereich der Spantkomponente mit einem Versatz in Bezug auf die sich quer zur radialen Richtung und zur Längsrichtung erstreckende Dickenrichtung angeordnet ist. Somit weist der Mittelsteg eine den Endbereich und den Verbindungsbereich verbindende Stufe auf. Damit kann bei einer Verbindung von zwei Spantkomponenten in einer überlappenden Anordnung der Verbindungsbereiche eine im Wesentlichen planare bzw. fluchtende Anordnung der zweiten Oberflächen der Mittelstege erzielt werden, was für den Kraftfluss günstig ist.

Gemäß einem zweiten Aspekt der Erfindung ist ein Spant für eine Rumpfstruktur eines Luftfahrzeugs vorgesehen, welcher zumindest zwei Spantkomponenten gemäß dem ersten Aspekt der Erfindung aufweist, wobei die Spantkomponenten an in Bezug auf die Längsrichtung entgegengesetzt angeordneten Verbindungsbereichen miteinander verbunden sind und einen geschlossenen Rahmen bilden, und wobei die erste Seite des Mittelstegs einer ersten Spantkomponente mit einer zweiten Seite des Mittelstegs einer zweiten Spantkomponente verbunden ist. Somit überlappen die miteinander verbundenen Spantkomponenten in Bezug auf die Längsrichtung in deren jeweiligem Verbindungsbereich. Die erste Oberfläche des Mittelstegs der ersten Spantkomponente liegt hierbei an der zweiten Oberfläche des Mittelstegs der zweiten Spantkomponente an. Die erste und die zweite Spantkomponente können beispielsweise mittels Nieten, Bolzen, Schrauben oder in ähnlicher Weise miteinander verbunden sein.

Gemäß einem dritten Aspekt der Erfindung ist eine Rumpfstruktur für Luftfahrzeug vorgesehen, welche zumindest zwei parallel zueinander angeordneten Spanten gemäß dem zweiten Aspekt der Erfindung aufweisen. Die Spanten definieren eine Rumpflängsachse. Die Rumpfstruktur weist ferner zumindest einen Stringer auf, welcher entlang der Rumpflängsachse verläuft und in den Stringerausnehmungen der Spante angeordnet ist.

Gemäß einem vierten Aspekt der Erfindung ist ein Verfahren zur Herstellung einer Spantkomponente nach dem ersten Aspekt der Erfindung vorgesehen. Das Verfahren umfasst ein Ausbilden eines Umfangsrands, welcher die zumindest eine Stringerausnehmung definiert, an einem Metallblech mittels eines zerspanenden Verfahrens. Das Metallblech wird hierbei gewissermaßen zugeschnitten oder allgemein in eine geometrische Form zerspant, welche einer Abwicklung der Spantkomponente entspricht. Als zerspanende Verfahren können insbesondere Fräsen oder Stanzen eingesetzt werden. Ein Vorteil des Fräsens liegt darin, dass eine Vielzahl an Blechen gestapelt und gleichzeitig bearbeitet werden können.

In einem weiteren Schritt erfolgt ein Ausbilden des Mittelstegs, des Innenstegs und des Außenstegs durch Umbiegen von sich von dem Umfangsrand aus erstreckenden Umbiegbereichen relativ zu einem den Mittelsteg bildenden zentralen Bereich des Metallblechs. Weiterhin wird die erste Verstärkungsausformung durch Verformen des Mittelstegs ausgebildet. Demnach werden die in Bezug auf die radiale Richtung entgegengesetzten Bereich des Metallblechs umgebogen und die Verstärkungsausformung wird ebenfalls durch einen Umformschritt erzeugt.

Ein der Erfindung zugrundeliegendes Konzept besteht darin, eine Spantkomponente mit einem C-förmigen Querschnitt bereitzustellen, welche einstückig bzw. integral durch Umformen eines Metallblechs hergestellt wird. Die den C-förmigen Querschnitt definierenden Innen- und Außenflansche oder Innen- und Außenstege stehen somit in derselben Richtung von einem Mittelsteg ab, welcher den Innensteg und den Außensteg verbindet. Im Bereich einer Stringerausnehmung, welche den äußeren Flansch bzw. den Außensteg der Spantkomponente unterbricht, wird durch Umformen eine Verstärkungsausformung ausgebildet, die sich zumindest abschnittsweise entlang der Längsrichtung erstreckt und in derselben Richtung von dem Mittelsteg vorsteht wie der Innensteg und der Außensteg. Somit sind sämtliche durch Umformung ausgebildete Strukturen auf derselben Seite des Mittelstegs angeordnet.

Einer der Vorteile der Erfindung liegt darin, dass eine Spantkomponente mit Mittelsteg, Innensteg, Außensteg und Verstärkungsausformung einstückig aus einem Metallblech hergestellt ist. Da sämtliche durch Umformung ausgebildete Strukturen auf derselben Seite des Mittelstegs angeordnet sind, können diese Strukturen sehr effizient in einem Biege- bzw. Umformverfahren hergestellt werden. Insbesondere kann dies in einem einzigen Umformschritt und optional sogar ohne Werkzeugwechsel erfolgen, wodurch eine äußerst schnelle Herstellung hoher Stückzahlen ermöglicht wird. Darüber hinaus wird durch die Verstärkungsausformung eine hervorragende mechanische Steifigkeit der Spantkomponente erzielt. Da die Verstärkungsausformung ebenfalls durch Umformen des Metallblechs hergestellt wird, handelt es sich auch hier um eine integrale Struktur der Spantkomponente, wodurch das Herstellungsverfahren weiter vereinfacht wird. Durch den C-förmigen Querschnitt der Spantkomponente kann ein Spant in einfacher Weise als geschlossener Rahmen aus mehreren Spantkomponenten gebildet werden, indem die Enden der einzelnen Spantkomponenten ineinandergeschoben werden.

Vorteilhafte Ausgestaltungen und Weiterbildungen ergeben sich aus den auf die unabhängigen Ansprüche rückbezogenen Unteransprüchen in Verbindung mit der Beschreibung. Die zu einem Aspekt der Erfindung offenbarten Merkmale und Vorteile gelten jeweils auch für die anderen Aspekte der Erfindung als offenbart.

Gemäß einer Ausführungsform der Spantkomponente kann die erste Verstärkungsausformung als eine von einer zweiten Seite des Mittelstegs her eingebrachte Sicke ausgebildet sein, welche in Bezug auf die radiale Richtung zwischen dem inneren Randbereich und der Stringerausnehmung angeordnet ist und entlang der Längsrichtung des Mittelstegs verläuft. Demnach weist der Mittelsteg eine Sicke auf, welche in Bezug auf die radiale Richtung unterhalb der Stringerausnehmung entlang der Längsrichtung verläuft. Die Sicke ist dadurch ausgebildet, dass die zweite Oberfläche des Mittelstegs eine beispielsweise konkave Vertiefung und die erste Oberfläche des Mittelstegs eine hierzu korrespondierend konvexe Wölbung ausbildet. Das Ausbilden der ersten Verstärkungsstruktur als Sicke bietet den Vorteil, dass hierdurch eine Art Verstärkungsrippe in einem plattenförmigen Bereich des Mittelstegs ausgebildet wird. Eine solche Sicke ist besonders einfach herstellbar, z.B. mittels eines Stempels und verbessert auf sehr effiziente Weise die Steifigkeit des Mittelstegs im Bereich der Stringerausnehmung.

Gemäß einer weiteren Ausführungsform der Spantkomponente kann vorgesehen sein, dass die erste Verstärkungsausformung dadurch ausgebildet ist, dass ein die Stringerausnehmung definierender Ausnehmungsrand des Mittelstegs zumindest teilweise zu der ersten Seite hin abgewinkelt ist. Demnach ist ein Rand des Mittelstegs, welcher die Stringerausnehmung definiert, zu der ersten Seite hin umgebogen. Somit steht ein die Stringerausnehmung definierender Rand über den Mittelsteg in der ersten Richtung vor. Auf diese Weise wird die Verstärkungsausformung direkt an der Stringerausnehmung ausgebildet, wodurch die Steifigkeit vorteilhaft an der Stelle erhöht wird, wo der Außensteg unterbrochen wird.

Generell kann die Spantkomponente mehrere entlang der Längsrichtung beabstandete Stringerausnehmungen aufweisen. Optional kann an jeder der Stringerausnehmungen eine Verstärkungsausformung, z.B. in Form einer Sicke oder einer Abwinkelung des Ausnehmungsrands ausgebildet sein. Insbesondere können an verschiedenen Stringerausnehmungen in verschiedener Weise ausgeführte Verstärkungsausformungen vorgesehen sein.

Gemäß einer weiteren Ausführungsform kann vorgesehen sein, dass in einem den inneren Randbereich des Mittelstegs und den Innensteg verbindenden Biegebereich zumindest eine dritte Verstärkungsausformung in Form einer von einer zweiten Seite des Mittelstegs her eingebrachte Sicke ausgebildet ist, welche auf der ersten Seite des Mittelstegs einen Vorsprung ausbildet. Demnach ist an einem gekrümmten Übergangsbereich zwischen dem Mittelsteg und dem Innensteg, eine Sicke ausgebildet. Eine zwischen dem Mittelsteg und dem Innensteg gebildete Hohlkehle weist somit einen die Hohlkehle überspannenden Vorsprung auf. An dem zu der Hohlkehle korrespondierenden Außenradius ist eine entsprechende Vertiefung ausgebildet. Damit die Biegesteifigkeit des Innenstegs relativ zu dem Mittelsteg vorteilhaft vergrößert. Die mechanische Steifigkeit der Spantkomponente insgesamt wird somit weiter verbessert. Ein weiterer Vorteil liegt darin, dass die dritte Verstärkungsausformung in Form einer von einer zweiten Seite des Mittelstegs her eingebrachte Sicke ausgebildet ist, da diese auf einfache Weise durch Umformen herstellbar ist. Damit wird die Herstellung der Spantkomponente weiter erleichtert, da auch die dritte Verstärkungsausformung als eine integrale Struktur des Metallblechs ausgebildet ist.

Optional können mehrere entlang der Längsrichtung beabstandet zueinander angeordnete dritte Verstärkungsausformungen vorgesehen sein. Damit wird die Biegesteifigkeit des Innenstegs relativ zu dem Mittelsteg weiter vergrößert.

Gemäß einer Ausführungsform kann sich die zweite Verstärkungsausformung zwischen dem Innensteg und dem Außensteg erstrecken. Insbesondere kann die die zweite Verstärkungsausformung ausbildende Sicke als eine gerade verlaufende, längliche Sicke ausgebildet sein.

Gemäß einer weiteren Ausführungsform kann die zweite Verstärkungsausformung einen sich entlang der radialen Richtung von dem Innensteg aus erstreckenden ersten Bereich, einen sich entlang des Außenstegs erstreckenden zweiten Bereich, welcher optional durch eine Stringerausnehmung unterbrochen ist, und einen den ersten und den zweiten Bereich verbindenden Übergangsbereich aufweisen. Demnach verläuft die die zweite Verstärkungsausformung ausbildende Sicke in etwa L-förmig.

Gemäß einer weiteren Ausführungsform weist die Spantkomponente zumindest einen optionalen Verstärkungswinkel auf, welcher mit der zweiten Seite des Mittelstegs im äußeren Randbereich verbunden ist und in Bezug auf die Längsrichtung benachbart zu der Stringerausnehmung angeordnet ist. Der Verstärkungswinkel weist insbesondere einen L-förmigen Querschnitt auf, wobei eine erste Lasche des Verstärkungswinkels mit dem Mittelsteg verbunden ist und eine von der ersten Lasche quer abstehende Lasche fluchtend mit dem Außensteg angeordnet sein kann. Der Verstärkungswinkel kann insbesondere mit dem Mittelsteg verniete sein. Durch den L-förmigen Querschnitt wird die Biegesteifigkeit der Spantkomponente vorteilhaft weiter vergrößert.

Gemäß einer weiteren Ausführungsform kann die Spantkomponente ein mit der zweiten Seite des Mittelstegs verbundenes Verstärkungsprofil aufweisen. Das Verstärkungsprofil kann insbesondere einen Plattenabschnitt, welcher sich zwischen dem inneren Randbereich und dem äußeren Randbereich des Mittelstegs erstreckt, und einen sich quer zu dem Plattenabschnitt erstreckenden Quersteg aufweisen, welcher im äußeren Randbereich des Mittelstegs angeordnet ist, wobei der Plattenabschnitt und der Quersteg eine zu der Stringerausnehmung korrespondierend ausgebildete Profil-Stringerausnehmung aufweisen. Demnach ist an der zweiten Seite bzw. der zweiten Oberfläche des Mittelstegs ein L-förmiges Profil befestigt, wobei der Quersteg des Profils beispielsweise fluchtend mit dem Außensteg angeordnet sein kann. Optional erstreckt sich der Plattenabschnitt über eine gesamte Breite des Mittelstegs in der radialen Richtung. Das Verstärkungsprofil sorgt damit aufgrund dessen L-förmigen Querschnitt für eine weitere Verbesserung der Biegesteifigkeit. Zusätzlich wird eine Dicke der Spantkomponente im Bereich des Mittelstegs erhöht. Dies erleichtert die Befestigung zusätzlicher Komponenten, z.B. von Querträgern zur Halterung von Böden oder von Verbindungsstangen zur Halterung von Bordmonumenten oder dergleichen.

Gemäß einer Ausführungsform kann die Rumpfstruktur eine Außenhaut aufweisen, welche mit den Außenstegen der Spantkomponenten der Spante verbunden ist. Die Außenhaut kann durch eine oder mehrere dünne Platten oder allgemein als eine Anordnung sich flächig erstreckender Bauteile realisiert sein, welche jeweils an den Außenstegen befestigt sind, z.B. mit diesen vernietet. Optional ist die Außenhaut zusätzlich an den Stringern befestigt.

Gemäß einer Ausführungsform des Verfahrens zur Herstellung der Spantkomponente kann vorgesehen sein, dass das Umbiegen des Umfangsrands und das Verformen des Mittelstegs in einem Schritt erfolgen. Dies ist vorteilhaft möglich, weil Innensteg, Außensteg und erste Verstärkungsausformung alle zur ersten Seite in ausgeformt werden. Somit wird die Effizienz des Herstellungsverfahrens weiter verbessert. Das Umformen des Metallblechs kann insbesondere in einem Formwerkzeug erfolgen, z.B. durch Tiefziehen, Pressen oder superplastisches Umformen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter "einstückig", "einteilig", "integral" oder "in einem Stück" ausgebildeten Komponenten oder Strukturen allgemein verstanden, dass diese Komponenten oder Strukturen als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

Im Folgenden wird die Erfindung unter Bezugnahme auf die Figuren der Zeichnungen erläutert. Von den Figuren zeigen:
- Fig. 1: eine schematische Ansicht eines Luftfahrzeugs, welches eine Rumpfstruktur gemäß einem Ausführungsbeispiel der Erfindung aufweist;
- Fig. 2: eine vereinfachte, schematische Schnittansicht der Rumpfstruktur gemäß einem Ausführungsbeispiel der Erfindung, die sich bei einem Schnitt entlang der in Fig. 1 gezeigten Linie A2-A2 ergibt;
- Fig. 3: eine abgebrochene Schnittansicht einer Rumpfstruktur gemäß einem Ausführungsbeispiel der Erfindung;
- Fig. 4: eine Detailansicht des durch den Buchstaben Z4 gekennzeichneten Bereichs einer Spantkomponente gemäß einem Ausführungsbeispiel der Erfindung der in Fig. 3 gezeigten Rumpfstruktur;
- Fig. 5: eine Schnittansicht der in Fig. 4 gezeigten Spantkomponente, die sich bei einem Schnitt entlang der in Fig. 4 gezeigten Linie A5-A5 ergibt;
- Fig. 6: eine Detailansicht des durch den Buchstaben Z6 gekennzeichneten Bereichs einer Spantkomponente gemäß einem Ausführungsbeispiel der Erfindung der in Fig. 3 gezeigten Rumpfstruktur;
- Fig. 7: eine Schnittansicht der in Fig. 6 gezeigten Spantkomponente, die sich bei einem Schnitt entlang der in Fig. 6 gezeigten Linie A7-A7 ergibt;
- Fig. 8: eine Detailansicht des durch den Buchstaben Z8 gekennzeichneten Bereichs einer Spantkomponente gemäß einem Ausführungsbeispiel der Erfindung der in Fig. 3 gezeigten Rumpfstruktur;
- Fig. 9: eine Schnittansicht der in Fig. 8 gezeigten Spantkomponente, die sich bei einem Schnitt entlang der in Fig. 8 gezeigten Linie A9-A9 ergibt;
- Fig. 10: eine abgebrochene Darstellung einer Verbindung von zwei Spantkomponenten in einer Rumpfstruktur gemäß einem Ausführungsbeispiel der Erfindung;
- Fig. 11: eine Schnittansicht der Rumpfstruktur, die sich bei einem Schnitt entlang der in Fig. 10 eingezeichneten Linie-A11-A11 ergibt;
- Fig. 12: eine Draufsicht auf eine zweite Seite einer Spantkomponente in einem Endbereich und einem Verbindungsbereich gemäß einem Ausführungsbeispiel der Erfindung;
- Fig. 13: eine Draufsicht auf eine zweite Seite einer Spantkomponente in einem Endbereich und einem Verbindungsbereich gemäß einem weiteren Ausführungsbeispiel der Erfindung;
- Fig. 14: eine abgebrochene Darstellung einer Verbindung von zwei Spantkomponenten in einer Rumpfstruktur gemäß einem weiteren Ausführungsbeispiel der Erfindung;
- Fig. 15: eine abgebrochene Darstellung einer Verbindung von zwei Spantkomponenten in einer Rumpfstruktur gemäß einem weiteren Ausführungsbeispiel der Erfindung;
- Fig. 16: eine Schnittansicht, die sich bei einem Schnitt entlang der in Fig. 15 eingezeichneten Linie A16-A16 ergibt;
- Fig. 17: eine abgebrochene Darstellung einer Spantkomponente in einer Rumpfstruktur gemäß einem weiteren Ausführungsbeispiel der Erfindung;
- Fig. 18: eine Schnittansicht, die sich bei einem Schnitt entlang der in Fig. 17 eingezeichneten Linie A18-A18 ergibt;
- Fig. 19: eine abgebrochene Darstellung einer Verbindung von zwei Spantkomponenten in einer Rumpfstruktur gemäß einem weiteren Ausführungsbeispiel der Erfindung;
- Fig. 20: eine Schnittansicht, die sich bei einem Schnitt entlang der in Fig. 19 eingezeichneten Linie A20-A20 ergibt;
- Fig. 21: eine Draufsicht auf ein Metallblech nach einem ersten Schritt eines Verfahrens zur Herstellung einer Spantkomponente gemäß einem Ausführungsbeispiel der Erfindung;
- Fig. 22: eine Draufsicht auf das Metallblech nach einem weiteren Schritt des Verfahrens; und
- Fig. 23: eine Draufsicht auf das Metallblech nach einem weiteren Schritt des Verfahrens.

In den Figuren bezeichnen dieselben Bezugszeichen gleiche oder funktionsgleiche Komponenten, soweit nichts Gegenteiliges angegeben ist.

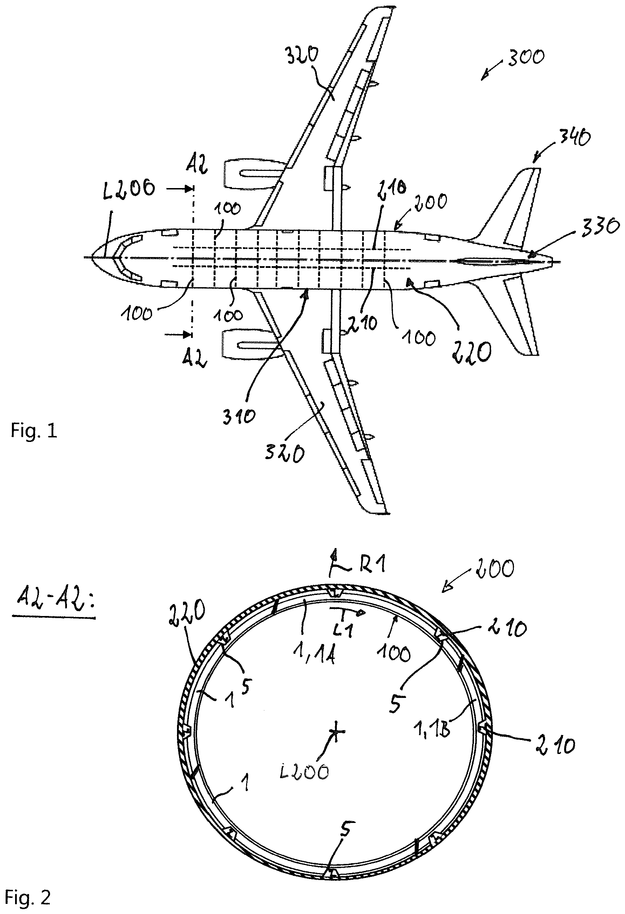

Fig. 1 zeigt schematisch eine Draufsicht auf ein Luftfahrzeug 300. Das Luftfahrzeug 300 weist einen sich entlang einer Rumpflängsachse L200 erstreckenden, zumindest abschnittsweise im Wesentlichen zylinderförmigen Rumpf 310 auf, von welchem aus sich Flügel 320, ein Seitenleitwerk 330 und ein Höhenleitwerk 340 erstrecken. Der Rumpf 310 weist eine Rumpfstruktur 200 mit mehreren Spanten 100, Stringern 210 und einer Außenhaut 220 auf. Die Spante 100 und Stringer 210 sind in Fig. 1 lediglich symbolisch durch gestrichelte Linien dargestellt. Wie in Fig. 1 erkennbar ist, sind zumindest zwei Spante 100 vorgesehen und diese sind entlang der Rumpflängsachse L200 beabstandet und parallel zueinander angeordnet. Die Stringer 210 erstrecken sich quer zu den Spanten 100 entlang der Rumpflängsachse L200.

Fig. 2 zeigt schematisch eine Schnittansicht der Rumpfstruktur 200. Wie in Fig. 2 schematisch gezeigt ist, bilden die Spante 100 jeweils einen geschlossenen Rahmen, welcher den Rumpfquerschnitt definiert bzw. die Rumpflängsachse L200 definiert und umschließt. Wie in Fig. 2 außerdem erkennbar ist, ist der Spant 100 aus mehreren untereinander verbundenen Spantkomponenten 1 zusammengesetzt. Die Spantkomponenten 1 weisen zumindest eine Stringerausnehmung 5 auf, in welcher der Stringer 210 aufgenommen ist. Die Außenhaut 220 ist an den Spanten 100 befestigt, z.B. mit diesen vernietet und/oder verklebt und kann optional zusätzlich an den Stringern 210 befestigt sein, z.B. mit diesen vernietet und/oder verklebt sein.

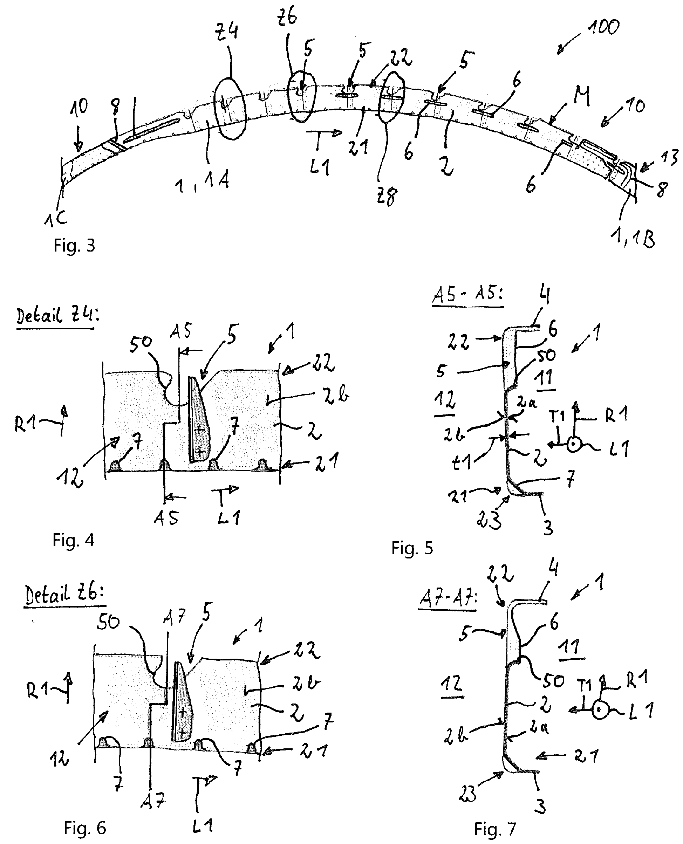

In Fig. 3 ist rein schematisch eine im Vergleich zu Fig. 2 detailliertere, abgebrochene Ansicht eines Spants 100 dargestellt. Wie bereits erläutert, ist der Spant 100 aus mehreren Spantkomponenten 1 zusammengesetzt. In Fig. 3 ist beispielhaft eine erste Spantkomponente 1A gezeigt, welche mit einem ersten Ende mit einer zweiten Spantkomponente 1B und mit einem zweiten Ende mit einer dritten Spantkomponente 1C verbunden ist. Die Spantkomponente 1 wird nachfolgende im Detail erläutert.

Wie in Fig. 3 erkennbar ist, erstreckt sich die Spantkomponente 1 bogenförmig entlang einer Längsrichtung L1. Die Fign. 4, 6 und 8 zeigen jeweils Detailansichten der Spantkomponente 1 an in Bezug auf die Längsrichtung L1 verschiedenen Stellen. Die Fign. 5, 7 und 9 zeigen jeweils zugehörige Schnittansichten. Wie den Fign. 3 bis 9 entnehmbar ist, weist die Spantkompnente 1 einen Mittelsteg 2, einen Innensteg 3, einen Außensteg 4, mehrere Stringerausnehmungen 5 und mehrere Verstärkungsausformungen 6, 7, 8 auf.

Wie insbesondere in Fig. 3 erkennbar ist, erstreckt sich der Mittelsteg 2 entlang der Längsrichtung L1 und definiert die bogenförmige Erstreckung der Spantkomponente 1. Ferner weist der Mittelsteg 2 eine Erstreckung in einer quer zur Längsrichtung L1 verlaufenden radialen Richtung R1 auf und umfasst einen in Bezug auf die radiale Richtung R1 inneren Randbereich 21 und einen in Bezug auf die radiale Richtung R1 entgegengesetzt zu diesem gelegenen äußeren Randbereich 22. Der Mittelsteg 2 weist eine eine erste Seite 11 definierende erste Oberfläche 2a und eine entgegengesetzt zu dieser orientierte zweite Oberfläche 2b auf, welche eine zweite Seite 12 definiert.

Wie in den Fign. 5, 7 und 9 jeweils schematisch und lediglich beispielhaft dargestellt ist, ist der Innensteg 3 mit dem inneren Randbereich 21 des Mittelstegs 2 verbunden und erstreckt sich auf der ersten Seite 11 und quer zu dem Mittelsteg 2. Insbesondere ist der Innensteg 3 von dem Mittelsteg 2 abgebogen, also durch einen Biegevorgang hergestellt. Der Außensteg 4 ist mit dem äußeren Randbereich 22 des Mittelstegs 2 verbunden und erstreckt sich ebenfalls auf der ersten Seite 11 und quer zu dem Mittelsteg 2. Auch der Außensteg 4 ist von dem Mittelsteg 2 abgebogen. Wie in den Fing. 5, 7 und 9 beispielhaft dargestellt ist, können sich der der Innensteg 3 und der Außensteg 4 in etwa parallel oder parallel erstrecken. Allgemein definieren der Mittelsteg 2, der Außensteg 4 und der Innensteg 3 gemeinsam einen C-förmigen Querschnitt der Spantkomponente 1.

Der Mittelsteg 2, der Außensteg 4 und der Innensteg 3 sind einstückig aus einem Metallblech M hergestellt. Das heißt, der Innensteg 3 und der Außensteg 4 sind jeweils durch Umbiegen eines Umbiegbereichs relativ zu einem zentralen Bereich eines Metallblechs M hergestellt. Damit können der Mittelsteg 2, der Außensteg 4 und der Innensteg 3 eine im Wesentliche konstante Dicke t1 aufweisen, welche in Fig. 5 beispielhaft zwischen der ersten und der zweiten Oberfläche 2a, 2b des Mittelstegs 2 eingezeichnet ist. Die Dicke t1 kann beispielsweise in einem Bereich zwischen 1,0 mm und 3,5 mm liegen. Das Metallblech M kann insbesondere aus einem Aluminiummaterial, beispielsweise einer Aluminiumlegierung, oder einem Titanmaterial, z.B. einer Titanlegierung gebildet sein.

In Fig. 3 ist beispielhaft dargestellt, dass die Spantkomponente 1 mehrere entlang der Längsrichtung L1 beabstandet angeordnete Stringerausnehmungen 5 aufweist. Allgemein ist zumindest eine Stringerausnehmung 5 vorgesehen. Die Stringerausnehmung 5 kann insbesondere eine Unterbrechung des Außenstegs 4 bilden und erstreckt sich im äußeren Randbereich 22 des Mittelstegs 2 zwischen der ersten und der zweiten Oberfläche 2a, 2b. Allgemein ist die Stringerausnehmung 5 somit eine in dem Außensteg 4 und in dem äußeren Randbereich 22 des Mittelstegs 2 ausgebildeten Stringerausnehmung 5. Wie in den Fign. 3 bis 9 beispielhaft dargestellt ist, kann die Stringerausnehmung 5 im Mittelsteg 2 eine im wesentlichen U-förmige Gestalt aufweisen, welche durch einen Ausnehmungsrand 50 des Mittelstegs 2 definiert ist. Selbstverständlich sind auch andere geometrische Formen der Stringerausnehmung 5 denkbar.

Der Mittelsteg 2 weist zumindest eine erste Verstärkungsausformung 6 auf, die jeweils einer Stringerausnehmung 5 zugeordnet ist. Optional ist, wenn mehrere Stringerausnehmungen 5 vorgesehen sind, jeder Stringerausnehmung 5 eine erste Verstärkungsausformung 6 zugeordnet. Es ist aber auch denkbar, dass nicht allen Stringerausnehmungen 5 eine erste Verstärkungsausformung 6 zugeordnet ist. Die Fign. 4 bis 9 zeigen beispielhaft verschiedene erste Verstärkungsausformungen 6. Wie in den Fign. 6 und 7 beispielhaft dargestellt ist, kann die erste Verstärkungsausformung 6 insbesondere dadurch ausgebildet sein, dass ein die Stringerausnehmung 5 definierender Ausnehmungsrand 50 des Mittelstegs 2 zumindest teilweise zu der ersten Seite 11 hin abgewinkelt ist. Demnach ist der Abschnitt des Rands 50 der Stringerausnehmung 5, der durch den Mittelsteg 2 gebildet ist, ganz oder teilweise zu der ersten Seite 11 hin umgebogen. In Fig. 5 ist beispielhaft dargestellt, dass der Ausnehmungsrand 50 des Mittelstegs 2 insgesamt zu der ersten Seite 11 hin abgewinkelt ist. In Fig. 7 ist beispielhaft dargestellt, dass der Ausnehmungsrand 50 des Mittelstegs 2 teilweise zu der ersten Seite 11 hin abgewinkelt ist, wobei die Verstärkungsausformung 6 von einem sich an den Außensteg 4 anschließender Bereich des Ausnehmungsrands 50 zu einem in Bezug auf die radiale Richtung R1 inneren Bereich zunehmend weiter auf die erste Seite 11 vorsteht. Die erste Verstärkungsausformung 6 ist somit allgemein im Bereich der Stringerausnehmung 5 gelegen und bildet auf der ersten Seite 11 des Mittelstegs 2 einen Vorsprung aus.

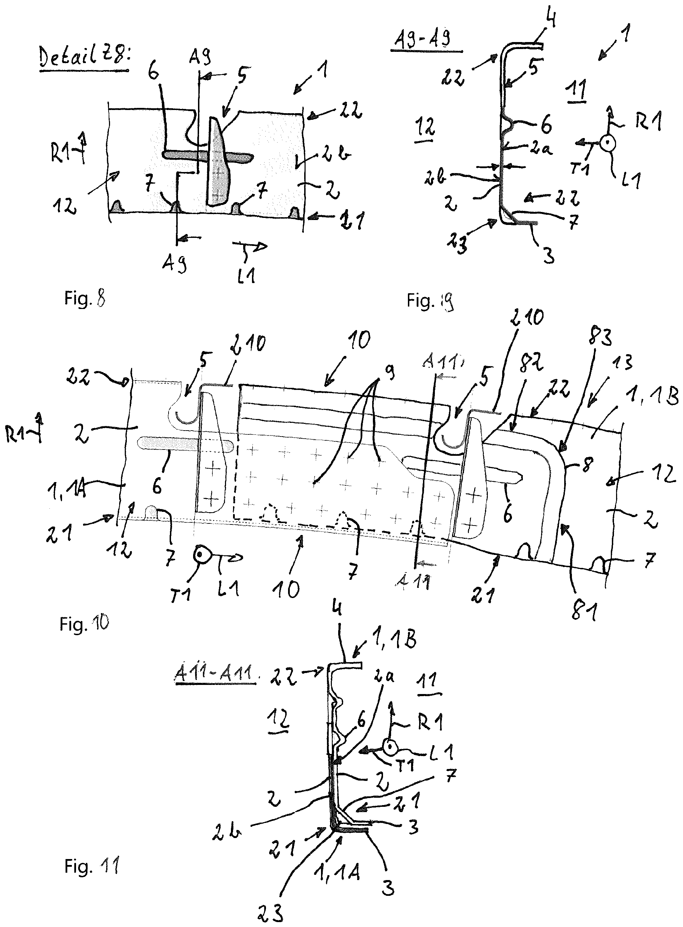

Alternativ oder zusätzlich zu der Abwinklung des Ausnehmungsrands 50 der Stringerausnehmung 5 kann die erste Verstärkungsausformung 6 auch als eine von einer zweiten Seite 12 des Mittelstegs 2 her eingebrachte Sicke ausgebildet sein. Dies ist beispielhaft in den Fign. 8 und 9 dargestellt. Wie insbesondere in Fig. 9 erkennbar, bildet Sicke in der zweiten Oberfläche 2b des Mittelstegs 2 eine Vertiefung und in der ersten Oberfläche 2a des Mittelstegs 2 eine entsprechende Erhöhung aus, welche somit auf die erste Seite 11 des Mittelstegs 2 vorsteht. Wie in den Fign. 8 und 9 erkennbar ist, kann die Sicke in Bezug auf die radiale Richtung R1 zwischen dem inneren Randbereich 21 des Mittelstegs 2 und der Stringerausnehmung 5 angeordnet sein. Wie in Fig. 8 schematisch dargestellt ist, erstreckt sich die Sicke zudem entlang der Längsrichtung L1. Die erste Verstärkungsausformung 6 ist somit allgemein im Bereich der Stringerausnehmung 5 gelegen und bildet auf der ersten Seite 11 des Mittelstegs 2 einen Vorsprung aus.

Wie in den Fign. 3 bis 9 weiterhin beispielhaft dargestellt ist, kann die Spantkomponente 1 optionale dritte Verstärkungsausformungen 7 aufweisen. Diese sind optional als Sicken ausgebildet, die in einem den inneren Randbereich 21 des Mittelstegs 2 und den Innensteg 3 verbindenden Biegebereich 23 von der zweiten Seite 12 des Mittelstegs 2 her eingebracht und bilden auf der ersten Seite 11 des Mittelstegs 2 einen Vorsprung aus. Dies ist insbesondere in den Fign. 5, 7 und 9 dargestellt. Der Biegebereich 23 ist ein mit einem Biegeradius gekrümmt verlaufender Bereich des Metallblechs M, welcher den Mittelsteg 2 und den Innensteg 3 verbindet. Durch Eindrücken des Biegebereichs 23 von der zweiten Seite 12 her bzw. von dessen konvex gekrümmten Seite her wird eine Sicke als dritte Verstärkungsausformung 7 ausgebildet, welche diagonal zwischen dem Innensteg 3 und dem Mittelsteg 2 verläuft, wie dies in den Fign. 5, 7 und 9 rein beispielhaft dargestellt ist. Die die dritte Verstärkungsausformung 7 bildenden Sicken können jeweils eine im Wesentlichen gleiche Ausdehnung in radialer Richtung R1 und in der Längsrichtung L1 aufweisen, wie dies in insbesondere in den Fign. 4, 6 und 8 beispielhaft dargestellt ist, und können damit allgemein als punktförmige Sicken realisiert sein. In den Fign. 3, 4, 6 und 8 ist jeweils rein beispielhaft dargestellt, dass mehrere entlang der Längsrichtung beabstandete Sicken als dritte Verstärkungsausformungen 7 vorgesehen sind. Allgemein kann die Spantkomponente 1 zumindest eine dritte Verstärkungsausformung 7 in Form einer Sicke aufweisen.

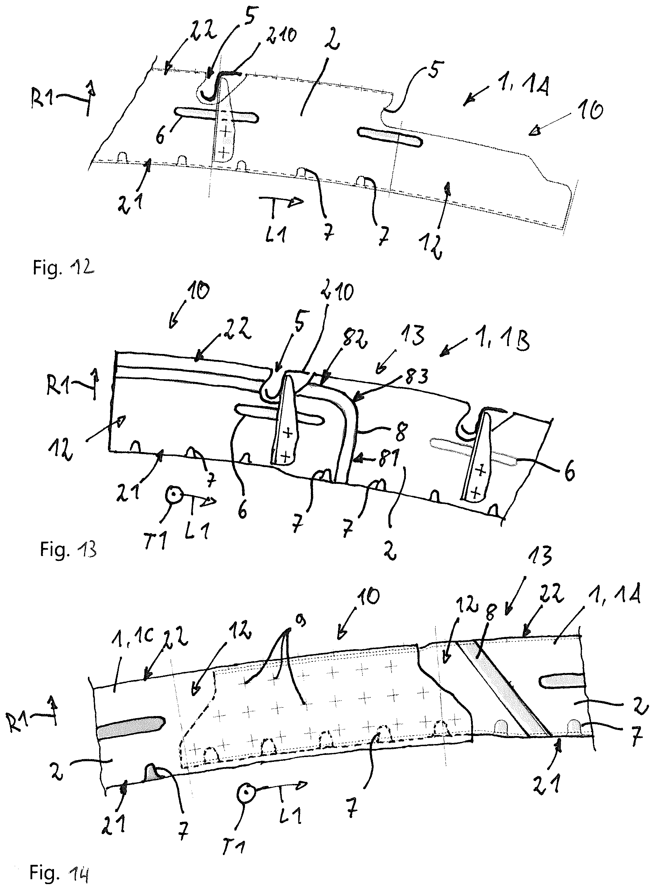

Zur Verbindung mit weiteren Spantkomponenten 1B, 1C weist die Spantkomponente 1 jeweils Verbindungsbereiche 10 auf, welche jeweils an in Bezug auf die Längsrichtung L1 entgegengesetzten Enden der Spantkomponente 1 ausgebildet sind bzw. diese Enden bilden. In Fig. 10 ist rein beispielhaft eine Verbindung einer erste Spantkomponente 1A mit einer zweiten Spantkomponente 1B dargestellt. Fig. 11 zeigt eine Schnittansicht der miteinander verbundenen Spantkomponenten 1A, 1B. Fig. 12 zeigt eine Draufsicht auf die zweite Seite 12 des Verbindungsbereichs 10 der ersten Spantkomponente 1A. Fig. 13 zeigt eine Draufsicht auf die zweite Seite 12 des Verbindungsbereichs 10 der zweiten Spantkomponente 1B.

Wie in den Fign. 10 bis 13 erkennbar ist, kann insbesondere vorgesehen sein, dass eine Ausdehnung bzw. eine Breite des Mittelstegs 2 in der radialen Richtung R1 im Verhältnis zu einem sich in der Längsrichtung L1 an den Verbindungsbereich 10 anschließenden Endbereich 13 verringert ist. Wie dies in Fig. 12 beispielhaft dargestellt ist, kann hierzu vorgesehen sein, dass der Außensteg 4 am Verbindungsbereich 10 endet. Optional kann außerdem vorgesehen sein, dass ein Rand des Mittelstegs 2 im Verbindungsbereich 10 sich in Bezug auf die radiale Richtung R1 auf dem Niveau eines Grunds der Stringerausnehmung 5 erstreckt, wie dies in Fig. 12 ebenfalls rein beispielhaft dargestellt ist.

Zusätzlich ist vorgesehen, dass der Verbindungsbereich 10 relativ zu dem Endbereich 13 mit einem Versatz in Bezug auf eine sich quer zur radialen Richtung und zur Längsrichtung erstreckenden Dickenrichtung T1 angeordnet ist. Zur Verbindung miteinander ist der Verbindungsbereich 10 der ersten Spantkomponente 1A in der Längsrichtung L1 überlappend mit dem Verbindungsbereich 10 der zweiten Spantkomponente 1B angeordnet. Dies ist in Fig. 10 rein beispielhaft dargestellt. Wie in Fig. 11 erkennbar ist, kann insbesondere vorgesehen sein, dass die Spantkompontenten 1A, 1B ineinander geschoben sind. Insbesondere liegt der Mittelsteg 2 der ersten Spantkomponente 1A mit der ersten Seite 11 bzw. der ersten Oberfläche 2a an der zweiten Seite 12 bzw. der zweiten Oberfläche 2b der zweiten Spantkomponente 1B an. Die erste und die zweite Spantkomponente 1A, 1B können insbesondere durch Nieten 9, welche in Fig. 10 lediglich symbolisch als Kreuze dargestellt sind, miteinander verbunden sein.

Wie in den Fign. 10 und 13 beispielhaft dargestellt ist, weist der Mittelsteg 2 in dem Endbereich 13 eine zweite Verstärkungsausformung 8 in Form einer von der zweiten Seite 12 des Mittelstegs 2 her eingebrachten Sicke auf. In den Fign. 10 und 13 ist rein beispielhaft dargestellt, dass die die zweite Verstärkungsausformung 8 bildende Sicke einen sich entlang der radialen Richtung R1 von dem Innensteg 3 aus erstreckenden ersten Bereich 81, einen sich entlang des Außenstegs 4 erstreckenden zweiten Bereich 82 und einen den ersten und den zweiten Bereich 81, 82 verbindenden Übergangsbereich 83 aufweist. Der Übergangsbereich 83 kann beispielsweise einen gekrümmten Verlauf aufweisen, wie dies in Fig. 13 beispielhaft dargestellt ist. Optional erstreckt sich der zweite Bereich 82 über die Stringerausnehmung 5 hinweg bzw. ist durch eine jeweilige Stringerausnehmung 5 unterbrochen, wie dies in Fig. 13 ebenfalls rein beispielhaft gezeigt ist. Der erste Bereich 81 der optionalen zweite Verstärkungsausformung 8 erstreckt sich in der radialen Richtung R1 und der zweite Bereich 82 erstreckt sich entlang der Längsrichtung L1. Damit kann allgemein vorgesehen sein, dass die die zweite Verstärkungsausformung 8 bildende Sicke sich zumindest teilweise oder abschnittsweise entlang der radialen Richtung R1 erstreckt.

In Fig. 14 ist rein schematisch eine Verbindung zwischen der ersten Spantkomponente 1A und einer dritten Spantkomponente 1C dargestellt. Die Verbindung kann insbesondere in der gleichen Weise realisiert sein, wie dies voranstehend beschrieben wurde. Wie in Fig. 14 beispielhaft dargestellt ist, kann die die zweite Verstärkungsausformung 8 bildende Sicke sich auch zwischen dem Innensteg 3 und dem Außensteg 4 erstrecken. Hierbei kann die Sicke linear verlaufen, wie in Fig. 14 beispielhaft dargestellt. Fig. 14 zeigt ebenfalls beispielhaft eine schräg zu der radialen Richtung R1 verlaufende Erstreckung der Sicke. Damit kann allgemein vorgesehen sein, dass die die zweite Verstärkungsausformung 8 bildende Sicke sich zumindest teilweise oder abschnittsweise entlang der radialen Richtung R1 erstreckt.

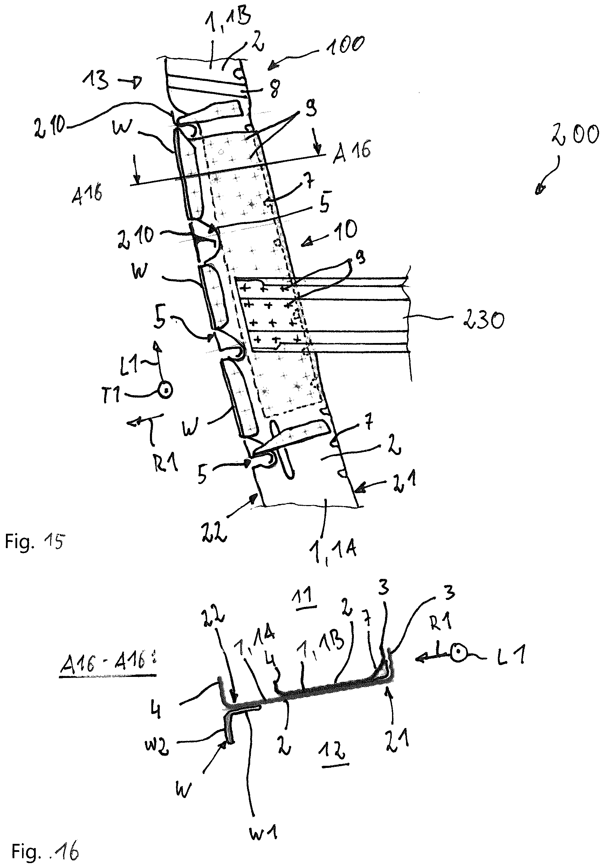

In Fig. 15 ist beispielhaft eine Verbindung zwischen zwei Spantkomponenten 1A, 1B dargestellt, wobei zusätzlich ein Querträger 230 mit dem durch die Spantkomponenten 1A, 1B gebildeten Spant 100 verbunden ist. Der Querträger 230 kann insbesondere im Bereich sich überlappender Verbindungsbereiche 10 der Spantkomponenten 1A, 1B an dem Spant 100 befestigt sein, z.B. durch Nieten 9, wie dies in Fig. 15 rein schematisch dargestellt ist.

Wie in Fig. 15 außerdem dargestellt ist, kann die Spantkomponente 1 optional einen oder mehrere Verstärkungswinkel W aufweisen. Fig. 16 zeigt beispielhaft eine Schnittansicht durch den Spant 100 entlang der in Fig. 15 eingezeichneten Linie A16-A16. Wie in Fig. 16 erkennbar ist, kann der Verstärkungswinkel W insbesondere einen L-förmigen Querschnitt aufweisen, welcher durch eine Basislasche W1 und eine sich von der Basislasche W1 und quer zu dieser erstreckende Querlasche W2 definiert ist. Der Verstärkungswinkel W ist mit der Basislasche W1 mit dem äußeren Randbereich 22 des Mittelstegs 2 verbunden, z.B. mittels Nieten 9. Insbesondere ist der Verstärkungswinkel W mit der zweiten Seite 12 bzw. der zweiten Oberfläche 2a des Mittelstegs 2 verbunden. Wie in Fig. 15 beispielhaft dargestellt ist, ist der Verstärkungswinkel W in Bezug auf die Längsrichtung L1 benachbart zu der Stringerausnehmung 5 angeordnet. In Fig. 15 ist rein beispielhaft dargestellt, dass ein jeweiliger Verstärkungswinkel W sich zwischen zwei benachbarten Stringerausnehmungen 5 erstreckt. Wie in Fig. 16 erkennbar ist, kann die Querlasche W2 in Bezug auf die radiale Richtung R1 fluchtend zu dem Außensteg 4 angeordnet sein. Fig. 15 zeigt rein beispielhaft, dass mehrere Verstärkungswinkel W vorgesehen sind. Selbstverständlich kann auch lediglich ein Verstärkungswinkel W vorgesehen sein. Darüber hinaus kann der zumindest eine Verstärkungswinkel W auch in anderen Bereichen als dem Endbereich 13 oder dem Verbindungsbereich 10 der Spankomponente 1 angeordnet sein.

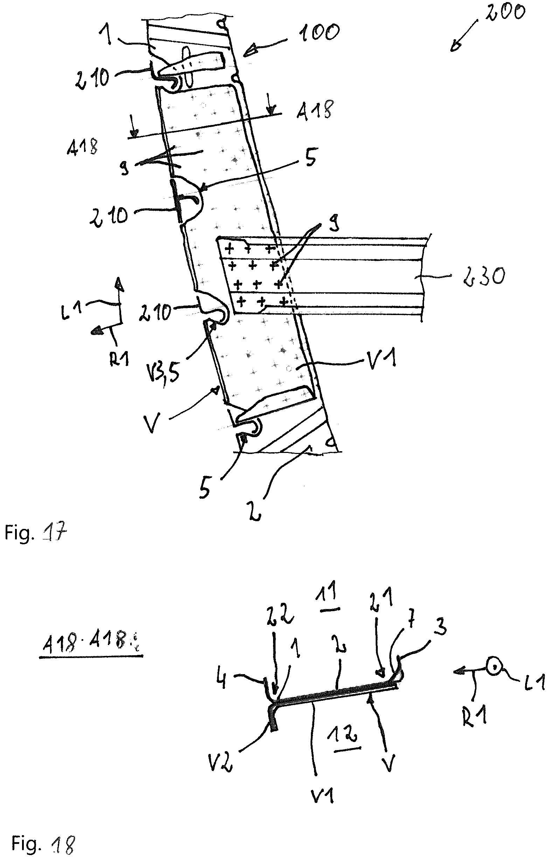

In Fig. 17 ist beispielhaft ein Spant 100 dargestellt, der eine Spantkomponente 1 mit einem optionalen Verstärkungsprofil V aufweist. Wie in Fig. 15 ist auch in Fig. 17 zusätzlich ein Querträger 230 mit der Spantkomponente 1 des Spants 100 verbunden. Wie in Fig. 18 schematisch dargestellt ist, weist das Verstärkungsprofil V einen L-förmigen Querschnitt auf, welcher durch einen Plattenabschnitt V1 und einen sich quer zu dem Plattenabschnitt V1 erstreckenden Quersteg V2 definiert ist. Ferner weist das Verstärkungsprofil V zumindest eine Profil-Stringerausnehmung V3 auf, welche optional mit derselben Querschnittsform gestaltet ist, wie eine jeweilige Stringerausnehmung 5 der Spantkomponente 1. Das optionale Verstärkungsprofil V ist mit der zweiten Seite 12 des Mittelstegs 2 verbunden, beispielsweise mittels Nieten 9. Insbesondere liegt der Plattenabschnitt V1 an der zweiten Oberfläche 2b des Mittelstegs 2 an. Wie in Fig. 18 schematisch dargestellt ist, kann der Plattenabschnitt V1 sich insbesondere zwischen dem inneren Randbereich 21 und dem äußeren Randbereich 22 des Mittelstegs 2 erstrecken. Der Quersteg V2 ist im äußeren Randbereich 22 des Mittelstegs 2 angeordnet und kann beispielsweise in Bezug auf die radiale Richtung R1 fluchtend zu dem Außensteg 4 angeordnet sein, wie dies in Fig. 18 beispielhaft dargestellt ist. Die Profil-Stringerausnehmungen V3 sind in Bezug auf die Längsrichtung L1 korrespondierend zu den Stringerausnehmungen 5 der Spantkomponente 1 angeordnet, so dass die Stringer 210, wie in Fig. 17 beispielhaft dargestellt, durch die Profil-Stringerausnehmungen V3 und die Stringerausnehmungen 5 der Spantkomponente 1 geführt werden können.

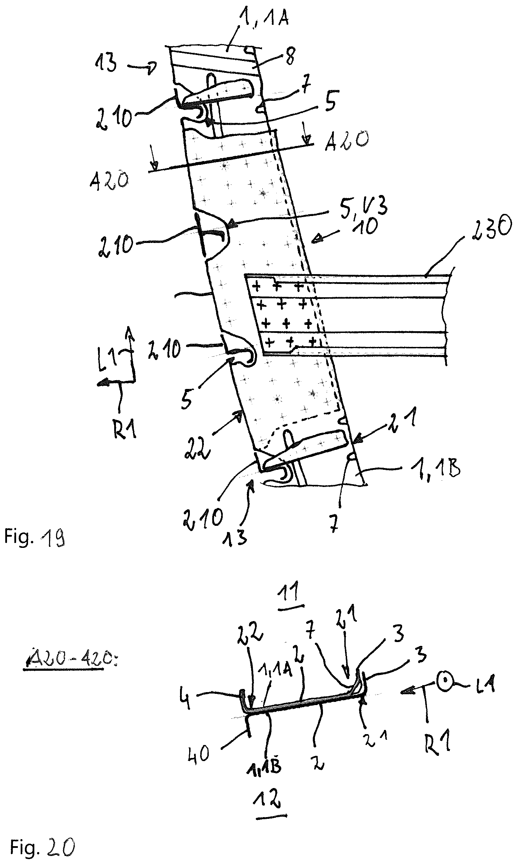

In Fig. 19 ist beispielhaft ein Abschnitt eines Spants 100 im Bereich einer Verbindung zweier Spantkomponenten 1A, 1B dargestellt, wobei ein Querträger 230 im Bereich der sich überlappenden Verbindungsbereiche 10 der Spantkomponenten 1A, 1B an dem Spant 100 befestigt ist. Die Verbindungsbereiche 10 der Spantkomponenten 1A, 1B können im Wesentlichen wie oben beschrieben gestaltet sein. Insbesondere kann der Außensteg 4 einer der Spantkomponenten 1 in dem Endbereich 13 an dem Verbindungsbereich 10 endet, wie dies in Bezug auf Fig. 12 beispielhaft erläutert wurde. Wie in Fig. 20 rein beispielhaft dargestellt ist, kann anstatt des Außenstegs 4, der sich zu der ersten Seite 11 hin erstreckt, in dem Verbindungsbereich 10 ein von dem äußeren Randbereich 22 des Mittelstegs 2 zu der zweiten Seite 12 hin abgebogener Stabilisierungssteg 40 vorgesehen sein. Dieser kann in Bezug auf die radiale Richtung R1 optional fluchtend zu dem Außensteg 4 der anderen Spantkomponente 1A angeordnet sein.

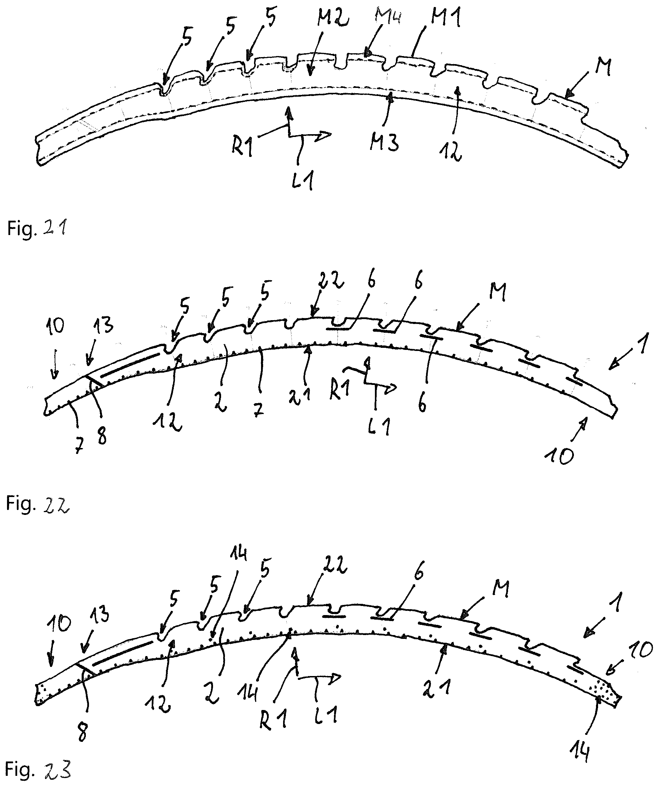

In den Fign. 21 bis 23 ist rein schematisch der Ablauf eines Verfahrens zur Herstellung einer jeweiligen Spantkomponente 1 dargestellt. In einem ersten Schritt erfolgt ein Ausbilden eines Umfangsrands M1, welcher die zumindest eine Stringerausnehmung 5 definiert, an einem Metallblech M mittels eines zerspanenden Verfahrens, insbesondere durch Fräsen oder Stanzen. Das Ergebnis dieses Schritts ist in Fig. 21 dargestellt. Demnach wird das Metallblech M in einem zerspanenden Verfahren so bearbeitet, dass der Umfangsrand M1 eine Abwicklung der Spantkomponente 1 definiert, wobei ein in Bezug auf die radiale Richtung R1 innerer Umbiegbereich M3 gebildet wird, der sich von dem Umfangsrand M1 aus erstreckt und zur Ausbildung des Innenstegs 3 vorgesehen ist, ein in Bezug auf die radiale Richtung R1 entgegengesetzt zu dem inneren Umbiegbereich M3 gelegener äußerer Umbiegbereich M4, der sich von dem Umfangsrand M1 aus erstreckt zur Ausbildung des Außenstegs 4 vorgesehen ist, und ein zentraler Bereich M2, der in Bezug auf die radiale Richtung R1 zwischen dem inneren und dem äußeren Umbiegbereich M3, M4 gelegen ist und zur Ausbildung des Mittelstegs 2 vorgesehen ist.

In einem weiteren Schritt erfolgt ein Ausbilden des Mittelstegs 2, des Innenstegs 3 und des Außenstegs 4 durch Umbiegen der Umbiegbereichen M3, M4 relativ zu dem zentralen Bereich M2 des Metallblechs M. Anschließend oder gleichzeitig mit dem Umbiegen kann die erste Verstärkungsausformung 6 durch Verformen des Mittelstegs 2 erfolgen. In gleicher Weise können die optionalen zweiten und dritten Verstärkungsausformungen 8, 7 ausgebildet werden. Das Resultat dieser Umformung ist in Fig. 22 beispielhaft dargestellt.

In einem optionalen weiteren Schritt können zusätzliche Durchgangsöffnungen 14 in das Metallblech M, insbesondere in den Mittelsteg 2, eingestanzt werden. Dies ist in Fig. 23 beispielhaft dargestellt. Die Durchgangsöffnungen 14 können z.B. zur Durchführung von Nieten 9, Bolzen, Schrauben oder dergleichen vorgesehen sein.

### BEZUGSZEICHENLISTE

- 1: Spantkomponente
- 1A: erste Spantkomponente
- 1B: zweite Spantkomponente
- 2: Mittelsteg
- 2a: erste Oberfläche des Mittelstegs
- 2b: zweite Oberfläche des Mittelstegs
- 3: Innensteg
- 4: Außensteg
- 5: Stringerausnehmung
- 50: Ausnehmungsrand
- 6: erste Verstärkungsausformung
- 7: dritte Verstärkungsausformung
- 8: zweite Verstärkungsausformung
- 9: Nieten
- 10: Verbindungsbereich
- 11: erste Seite
- 12: zweite Seite
- 13: Endbereich
- 14: Durchgangsöffnungen
- 21: innerer Randbereich des Mittelstegs
- 22: äußerer Randbereich des Mittelstegs
- 23: Biegebereich
- 81: erster Bereich
- 82: zweiter Bereich
- 83: Übergangsbereich

- 100: Spant
- 200: Rumpfstruktur
- 210: Stringer
- 220: Außenhaut
- 230: Querträger
- 300: Luftfahrzeug
- 310: Rumpf
- 320: Flügel
- 330: Seitenleitwerk
- 340: Höhenleitwerk

- L1: Längsrichtung
- L200: Rumpflängsachse
- M: Metallblech
- M1: Umfangsrand des Metallblechs
- M2: zentraler, mittlerer Bereich des Metallblechs
- M3: innerer Umbiegbereich des Metallblechs
- M4: äußerer Umbiegbereich des Metallblechs
- R1: radiale Richtung
- T1: Dickenrichtung
- V: Verstärkungsprofil
- V1: Plattenabschnitt
- V2: Quersteg
- V3: Profil-Stringerausnehmung
- W: Verstärkugswinkel
- W1: Basislasche
- W2: Querlasche

## Patentansprüche

1. Spantkomponente (1) für einen Spant (100) einer Rumpfstruktur (200) eines Luftfahrzeugs (300), mit:
einem sich entlang einer Längsrichtung (L1) erstreckenden Mittelsteg (2), welcher einen in Bezug auf eine quer zur Längsrichtung (L1) verlaufende radiale Richtung (R1) inneren Randbereich (21) und einen in Bezug auf die radiale Richtung (R1) äußeren Randbereich (22) aufweist;
einem von dem inneren Randbereich (21) des Mittelstegs (2) zu einer ersten Seite (11) hin abgebogenen Innensteg (3);
einem von dem äußeren Randbereich (22) des Mittelstegs (2) zu der ersten Seite (11) hin abgebogenen Außensteg (4), wobei der Mittelsteg (2), der Außensteg (4) und der Innensteg (3) einstückig aus einem Metallblech (M) hergestellt sind und gemeinsam einen C-förmigen Querschnitt der Spantkomponente (1) definieren; und
zumindest einer in dem Außensteg (4) und in dem äußeren Randbereich (22) des Mittelstegs (2) ausgebildeten Stringerausnehmung (5);
wobei der Mittelsteg (2) im Bereich der Stringerausnehmung (5) eine erste Verstärkungsausformung (6) aufweist, welche auf der ersten Seite (11) des Mittelstegs (2) einen Vorsprung ausbildet; **dadurch gekennzeichnet, dass** die Spantkomponente (1; 1A) einen Verbindungsbereich (10) zur Verbindung mit einer weiteren Spantkomponente (1; 1B) aufweist, welcher in der Längsrichtung (L1) ein Ende der Spantkomponente (1; 1A) bildet,
wobei der Mittelsteg (2) an einem sich in Bezug auf die Längsrichtung (L1) an den Verbindungsbereich (10) anschließenden Endbereich (13) eine zweite Verstärkungsausformung (8) in Form einer von einer zweiten Seite (12) des Mittelstegs (2) her eingebrachten Sicke aufweist, welche auf der ersten Seite (11) des Mittelstegs (2) einen Vorsprung ausbildet und sich zumindest teilweise entlang der radialen Richtung (R1) erstreckt; und
wobei der Verbindungsbereich (10) der Spantkomponente (1) relativ zu dem Endbereich (13) der Spantkomponente (1) mit einem Versatz in Bezug auf eine sich quer zur radialen Richtung und zur Längsrichtung erstreckenden Dickenrichtung (T1) angeordnet ist.

2. Spantkomponente (1) nach Anspruch 1, wobei die erste Verstärkungsausformung (6) als eine von einer zweiten Seite (12) des Mittelstegs (2) her eingebrachte Sicke ausgebildet ist, welche in Bezug auf die radiale Richtung (R1) zwischen dem inneren Randbereich (21) und der Stringerausnehmung (5) angeordnet ist und entlang der Längsrichtung (L1) des Mittelstegs (2) verläuft.

3. Spantkomponente (1) nach Anspruch 1 oder 2, wobei die erste Verstärkungsausformung (6) dadurch ausgebildet ist, dass ein die Stringerausnehmung (5) definierender Ausnehmungsrand (50) des Mittelstegs (2) zumindest teilweise zu der ersten Seite (11) hin abgewinkelt ist.

4. Spantkomponente (1) nach einem der voranstehenden Ansprüche, wobei in einem den inneren Randbereich (21) des Mittelstegs (2) und den Innensteg (3) verbindenden Biegebereich (23) zumindest eine dritte Verstärkungsausformung (7) in Form einer von einer zweiten Seite (12) des Mittelstegs (2) her eingebrachte Sicke ausgebildet ist, welche auf der ersten Seite (11) des Mittelstegs (2) einen Vorsprung ausbildet.

5. Spantkomponente (1) nach Anspruch 1, wobei die zweite Verstärkungsausformung (8) sich zwischen dem Innensteg (3) und dem Außensteg (4) erstreckt.

6. Spantkomponente (1) nach Anspruch 1, wobei die zweite Verstärkungsausformung (8) einen sich entlang der radialen Richtung (R1) von dem Innensteg (3) aus erstreckenden ersten Bereich (81), einen sich entlang des Außenstegs (4) erstreckenden zweiten Bereich (82), welcher optional durch eine Stringerausnehmung (5) unterbrochen ist, und einen den ersten und den zweiten Bereich (81; 82) verbindenden Übergangsbereich (83) aufweist.

7. Spantkomponente (1) nach einem der voranstehenden Ansprüche, zusätzlich aufweisend:
zumindest einen Verstärkungswinkel (W), welcher mit einer zweiten Seite (12) des Mittelstegs (2) im äußeren Randbereich (22) verbunden ist, insbesondere mit diesem vernietet ist, und in Bezug auf die Längsrichtung (L1) benachbart zu der Stringerausnehmung (5) angeordnet ist.

8. Spantkomponente (1) nach einem der voranstehenden Ansprüche, zusätzlich aufweisend:
ein mit einer zweiten Seite (12) des Mittelstegs (2) verbundenes Verstärkungsprofil (V) mit einem Plattenabschnitt (V1), welcher sich zwischen dem inneren Randbereich (21) und dem äußeren Randbereich (22) des Mittelstegs (2) erstreckt, und einem sich quer zu dem Plattenabschnitt (V1) erstreckenden Quersteg (V2), welcher im äußeren Randbereich (22) des Mittelstegs (2) angeordnet ist, wobei der Plattenabschnitt (V1) und der Quersteg (V2) eine zu der Stringerausnehmung (5) korrespondierend ausgebildete Profil-Stringerausnehmung (V3) aufweisen.

9. Spant (100) für eine Rumpfstruktur (200) eines Luftfahrzeugs (300), mit zumindest zwei Spantkomponenten (1A; 1B) gemäß einem der voranstehenden Ansprüche, wobei die Spantkomponenten (1A; 1B) an in Bezug auf die Längsrichtung (L1) entgegengesetzt angeordneten Verbindungsbereichen (10) miteinander verbunden sind und einen geschlossenen Rahmen bilden, und wobei die erste Seite (11) des Mittelstegs (2) einer ersten Spantkomponente (1A) mit einer zweiten Seite (12) des Mittelstegs (2) einer zweiten Spantkomponente (1B) verbunden ist.

10. Rumpfstruktur (200) für Luftfahrzeug (300), mit:
zumindest zwei parallel zueinander angeordneten Spanten (100) gemäß Anspruch 9, welche eine Rumpflängsachse (L200) definieren; und
zumindest einem Stringer (210), welcher entlang der Rumpflängsachse (L200) verläuft und in den Stringerausnehmungen (5) der Spante (100) angeordnet ist.

11. Rumpfstruktur (200) nach Anspruch 10, zusätzlich aufweisend:
eine Außenhaut (220), welche mit den Außenstegen (4) der Spantkomponenten (1) der Spante (100) verbunden ist.

12. Verfahren zur Herstellung einer Spantkomponente (1) nach einem der Ansprüche 1 bis 8 mit folgenden Schritten:
Ausbilden eines Umfangsrands (M1), welcher die zumindest eine Stringerausnehmung (5) definiert, an einem Metallblech (M) mittels eines zerspanenden Verfahrens, insbesondere durch Fräsen oder Stanzen;
Ausbilden des Mittelstegs (2), des Innenstegs (3) und des Außenstegs (4) durch Umbiegen von sich von dem Umfangsrand (M1) aus erstreckenden Umbugbereichen (M3; M4) relativ zu einem den Mittelsteg (2) bildenden zentralen Bereich (M2) des Metallblechs (M); und
Ausbilden der ersten Verstärkungsausformung (6) durch Verformen des Mittelstegs (2).

13. Verfahren nach Anspruch 12, wobei das Umbiegen des Umfangsrands (M1) und das Verformen des Mittelstegs (2) in einem Schritt erfolgen, insbesondere in einem Formwerkzeug, insbesondere durch Tiefziehen, Pressen oder superplastisches Umformen.

## Claims

1. Frame component (1) for a frame (100) of a fuselage structure (200) of an aircraft (300), comprising:
a central web (2) extending along a longitudinal direction (L1), which has an inner edge region (21) with respect to a radial direction (R1) extending transversely to the longitudinal direction (L1) and an outer edge region (22) with respect to the radial direction (R1);
an inner web (3) bent from the inner edge region (21) of the central web (2) towards a first side (11);
an outer web (4) bent from the outer edge region (22) of the central web (2) towards the first side (11), wherein the central web (2), the outer web (4) and the inner web (3) are made in one piece from a metal sheet (M) and
together define a C-shaped cross-section of the frame component (1); and at least one stringer recess (5) formed in the outer web (4) and in the outer edge region (22) of the central web (2);
wherein the central web (2) has, in the region of the stringer recess (5), a first reinforcing formation (6) which forms a projection on the first side (11) of the central web (2); **characterised in that**
the frame component (1; 1A) has a connecting region (10) for connection to a further frame component (1; 1B), which connecting region (10) forms one end of the frame component (1; 1A) in the longitudinal direction (L1), the central web (2) having, at an end region (13) adjoining the connecting region (10) with respect to the longitudinal direction (L1), a second reinforcing formation (8) in the form of a bead introduced from a second side (12) of the central web (2), which bead forms a projection on the first side (11) of the central web (2) and extends at least partly along the radial direction (R1); and
wherein the connecting portion (10) of the frame component (1) is arranged relative to the end region (13) of the frame component (1) with an offset with respect to a thickness direction (T1) extending transversely to the radial direction and to the longitudinal direction.

2. The frame component (1) according to claim 1, wherein the first reinforcing formation (6) is formed as a bead introduced from a second side (12) of the central web (2), which bead is arranged between the inner edge region (21) and the stringer recess (5) with respect to the radial direction (R1) and extends along the longitudinal direction (L1) of the central web (2).

3. The frame component (1) according to claim 1 or 2, wherein the first reinforcing formation (6) is formed in that a recess edge (50) of the central web (2) defining the stringer recess (5) is at least partially angled towards the first side (11).

4. The frame component (1) according to one of the preceding claims, wherein in a bending region (23) connecting the inner edge region (21) of the central web (2) and the inner web (3) at least one third reinforcing formation (7) is formed in the form of a bead introduced from a second side (12) of the central web (2), which bead forms a projection on the first side (11) of the central web (2).

5. The frame component (1) according to claim 1, wherein the second reinforcing formation (8) extends between the inner web (3) and the outer web (4).

6. The frame component (1) according to claim 1, wherein the second reinforcing formation (8) comprises a first region (81) extending along the radial direction (R1) from the inner web (3), a second region (82) extending along the outer web (4), optionally interrupted by a stringer recess (5), and a transition region (83) connecting the first and second regions (81; 82).

7. The frame component (1) according to one of the preceding claims, additionally comprising:
at least one reinforcing angle (W) which is connected to a second side (12) of the central web (2) in the outer edge region (22), in particular is riveted thereto, and is arranged adjacent to the stringer recess (5) with respect to the longitudinal direction (L1).

8. The frame component (1) according to one of the preceding claims, additionally comprising:
a reinforcing profile (V) connected to a second side (12) of the central web (2) and having a plate section (V1) extending between the inner edge region (21) and the outer edge region (22) of the central web (2), and a transverse web (V2) which extends transversely to the plate section (V1) and is arranged in the outer edge region (22) of the central web (2), the plate section (V1) and the transverse web (V2) having a profile stringer recess (V3) which is designed to correspond to the stringer recess (5).

9. A frame (100) for a fuselage structure (200) of an aircraft (300), comprising at least two frame components (1A; 1B) according to one of the preceding claims, wherein the frame components (1A; 1B) being connected to each other at connecting regions (10) arranged opposite to each other with respect to the longitudinal direction (L1) and forming a closed frame, and wherein the first side (11) of the central web (2) of a first frame component (1A) is connected to a second side (12) of the central web (2) of a second frame component (1B).

10. A fuselage structure (200) for aircraft (300), comprising:
at least two frames (100) according to claim 9 and arranged parallel to each other, which define a longitudinal fuselage axis (L200); and
at least one stringer (210) extending along the longitudinal fuselage axis (L200) and being arranged in the stringer recesses (5) of the frames (100).

11. The fuselage structure (200) of claim 10, further comprising:
an outer skin (220) which is connected to the outer webs (4) of the frame components (1) of the frames (100).

12. A method of manufacturing a frame component (1) according to any one of claims 1 to 8, comprising the following steps:
forming of a peripheral edge (M1), which defines the at least one stringer recess (5), on a metal sheet (M) by means of a machining process, in particular by milling or punching;
forming the central web (2), the inner web (3) and the outer web (4) by bending over portions (M3; M4) extending from the peripheral edge (M1) relative to a central portion (M2) of the metal sheet (M) forming the central web (2); and
forming the first reinforcement formation (6) by deforming the central web (2).

13. Method according to claim 12, wherein the bending of the peripheral edge (M1) and the deforming of the central web (2) are carried out in one step, in particular in a forming tool, in particular by deep drawing, pressing or superplastic forming.

## Revendications

1. Composant de membrure (1) pour une membrure (100) d'une structure de fuselage (200) d'un aéronef (300), comprenant :
une entretoise centrale (2) s'étendant le long d'une direction longitudinale (L1), qui présente une zone de bordure intérieure (21) par rapport à une direction radiale (R1) s'étendant transversalement à la direction longitudinale (L1) et une zone de bordure extérieure (22) par rapport à la direction radiale (R1) ;
une entretoise intérieure (3) pliée à partir de la zone de bordure intérieure (21) de l'entretoise centrale (2) vers un premier côté (11) ;
une entretoise extérieure (4) pliée à partir de la zone de bordure extérieure (22) de la entretoise centrale (2) vers le premier côté (11), la entretoise centrale (2), la entretoise extérieure (4) et la entretoise intérieure (3) étant fabriquées en une seule pièce à partir d'une tôle métallique (M) et définissant ensemble une section transversale en forme de C du composant de membrure (1) ; et
au moins un évidement de string (5) formé dans la entretoise extérieure (4) et dans la zone de bordure extérieure (22) de la entretoise centrale (2) ;
l'âme centrale (2) présentant, dans la zone de l'évidement de string (5), une première conformation de renforcement (6) qui forme une saillie sur le premier côté (11) de l'entretoise centrale (2) ; **caractérisé en ce que** le composant de membrure (1 ; 1A) présente une zone de liaison (10) pour la liaison avec un autre composant de membrure (1 ; 1B), qui constitue dans la direction longitudinale (L1) une extrémité du composant de membrure (1 ; 1A), la entretoise centrale (2) présentant, sur une zone d'extrémité (13) se raccordant à la zone de liaison (10) par rapport à la direction longitudinale (L1), une deuxième conformation de renforcement (8) sous la forme d'une moulure introduite depuis un deuxième côté (12) de la entretoise centrale (2), laquelle forme une saillie sur le premier côté (11) de la entretoise centrale (2) et s'étend au moins partiellement le long de la direction radiale (R1) ; et
dans lequel la partie de liaison (10) du composant de membrure (1) est disposée par rapport à la zone d'extrémité (13) du composant de membrure (1) avec un décalage par rapport à une direction d'épaisseur (T1) s'étendant transversalement à la direction radiale et à la direction longitudinale.

2. Composant de membrure (1) selon la revendication 1, dans lequel la première conformation de renforcement (6) est réalisée sous la forme d'une moulure introduite à partir d'un deuxième côté (12) de l'entretoise centrale (2), qui est disposée, par rapport à la direction radiale (R1), entre la zone de bordure intérieure (21) et l'évidement de string (5) et s'étend le long de la direction longitudinale (L1) de l'entretoise centrale (2).

3. Composant de membrure (1) selon la revendication 1 ou 2, dans lequel la première conformation de renforcement (6) est réalisée en ce qu'un bord d'évidement (50) de l'entretoise centrale (2) définissant l'évidement de string (5) est au moins partiellement coudé vers le premier côté (11).

4. Composant de membrure (1) selon l'une des revendications précédentes, dans lequel au moins une troisième conformation de renforcement (7) est réalisée dans une zone de flexion (23) reliant la zone de bordure intérieure (21) de l'entretoise centrale (2) et l'entretoise intérieure (3), sous la forme d'une moulure introduite depuis un deuxième côté (12) de l'entretoise centrale (2), laquelle forme une saillie sur le premier côté (11) de l'entretoise centrale (2).

5. Composant de membrure (1) selon la revendication 1, dans lequel la deuxième conformation de renforcement (8) s'étend entre l'entretoise intérieure (3) et l'entretoise extérieure (4).

6. Composant de membrure (1) selon la revendication 1, dans lequel la deuxième formation de renforcement (8) comprend une première zone (81) s'étendant le long de la direction radiale (R1) à partir de l'entretoise intérieure (3), une deuxième zone (82) s'étendant le long de l'entretoise extérieure (4), qui est éventuellement interrompue par un évidement de string (5), et une zone de transition (83) reliant les première et deuxième zones (81 ; 82).

7. Composant de membrure (1) selon l'une des revendications précédentes, comprenant en outre :
au moins une cornière de renforcement (W) qui est reliée à un deuxième côté (12) de la entretoise centrale (2) dans la zone de bordure extérieure (22), en particulier rivetée à celle-ci, et qui est disposée au voisinage de l'évidement de string (5) par rapport à la direction longitudinale (L1).

8. Composant de membrure (1) selon l'une des revendications précédentes, comprenant en outre :
un profilé de renforcement (V) relié à un deuxième côté (12) de l'entretoise centrale (2), comprenant une section de plaque (V1) qui s'étend entre la zone de bordure intérieure (21) et la zone de bordure extérieure (22) de l'entretoise centrale (2), et une traverse (V2) s'étendant transversalement à la section de plaque (V1), qui est disposée dans la zone de bordure extérieure (22) de la entretoise centrale (2), la section de plaque (V1) et la traverse (V2) présentant un évidement de traverse profilé (V3) réalisé de manière à correspondre à l'évidement de traverse (5).

9. Membrure (100) pour une structure de fuselage (200) d'un aéronef (300), comprenant au moins deux composants de membrure (1A ; 1B) selon l'une quelconque des revendications précédentes, dans lequel les composants de membrure (1A ; 1B) sont reliés entre eux au niveau de zones de liaison (10) disposées de manière opposée par rapport à la direction longitudinale (L1) et forment un cadre fermé, et dans lequel le premier côté (11) de l'entretoise centrale (2) d'un premier composant de membrure (1A) est relié à un deuxième côté (12) de l'entretoise centrale (2) d'un deuxième composant de membrure (1B).

10. Structure de fuselage (200) pour aéronef (300), comprenant :
au moins deux membrures (100) disposées parallèlement l'une à l'autre selon la revendication 9, qui définissent un axe longitudinal du fuselage (L200) ; et
au moins un string (210) qui s'étend le long de l'axe longitudinal du fuselage (L200) et qui est disposé dans les évidements de string (5) des membrures (100).

11. Structure de fuselage (200) selon la revendication 10, comprenant en outre une peau extérieure (220) qui est reliée aux entretoises extérieures (4) des composants de membrure (1) de la membrure (100).

12. Procédé de fabrication d'un composant de membrure (1) selon l'une des revendications 1 à 8, comprenant les étapes suivantes :
former d'un bord périphérique (M1), qui définit l'au moins un évidement de string (5), sur une tôle métallique (M) au moyen d'un procédé d'enlèvement de copeaux, en particulier par fraisage ou estampage ;
former l'entretoise centrale (2), l'entretoise intérieure (3) et l'entretoise extérieure (4) en pliant des parties pliées (M3 ; M4) s'étendant depuis le bord périphérique (M1) par rapport à une partie centrale (M2) de la tôle métallique (M) formant l'entretoise centrale (2) ; et
former la première conformation de renforcement (6) en déformant l'entretoise centrale (2).

13. Procédé selon la revendication 12, dans lequel le pliage du bord périphérique (M1) et la déformation de l'entretoise centrale (2) sont réalisés en une seule étape, en particulier dans un outil de formage, notamment par emboutissage, pressage ou formage superplastique.
